# EUROPÄISCHE PATENTSCHRIFT

(11) **EP 2 772 223 B1**
(45) Veröffentlichungstag und Bekanntmachung des Hinweises auf die Patenterteilung: **11.10.2017**
(21) Anmeldenummer: 13157042.6
(22) Anmeldetag: 27.02.2013
(51) Int. Cl.: A61C 13/20, F27B 17/02

(54) **Dentalpressofen**
Dental press kiln
Four dentaire de moulage par compression

(43) Veröffentlichungstag der Anmeldung: 03.09.2014
(73) Patentinhaber: Ivoclar Vivadent AG, 9494 Schaan (LI)
(72) Erfinder: Jussel, Rudolf, 6805 Feldkirch-Gisingen (AT)
(74) Vertreter: Baronetzky, Klaus

(56) Entgegenhaltungen:
- EP-A1- 1 978 321
- EP-A1- 2 105 691
- WO-A1-03/011168
- DE-A1-102006 004 433

## Beschreibung

Die Erfindung betrifft einen Dentalpressofen mit einem Pressstempel, gemäß dem Oberbegriff von Anspruch 1.

Aus der DE 100 39 147 A1 ist ein Dentalpressofen mit einer Brennkammer und einer in der Brennkammer aufgenommenen Muffel mit einem Hohlraum in der Form eines Dentalrestaurationsteils bekannt. In der Brennkammer kann ein in der Muffel aufgenommener Rohling in Form eines Keramikrohlings bis auf eine Presstemperatur erwärmt werden, bei der der Rohling viskos wird, um ihn mit einem Pressstempel in den Hohlraum zu verpressen. Um den optimalen Zeitpunkt zum Starten des Verpressvorgangs zu ermitteln, bei dem der Rohling die Presstemperatur erreicht hat, ist in der Muffel ein Thermoelement aufgenommen. Je nach der Ausgangstemperatur des Dentalpressofens oder der Muffel kommt es jedoch hierbei immer wieder zu Fehlpressungen.

Die WO 03 011 168 A1 beschreibt einen Dentalpressofen zum Herstellen eines Dentalrestaurationsteils in einer Muffel durch Erwärmen und Verpressen eines Rohlings. Der Dentalpressofen umfasst eine Brennkammer und einen in einer Führungsöffnung geführten Pressstempel zum Beaufschlagen des erwärmten Rohlings in der Muffel mit einer Presskraft. Ein in eine Ausnehmung der Muffel hineinragender Temperatursensor misst die Temperatur der Muffel. Die EP 2 105 691 A1 beschreibt einen Dentalbrennofen mit einer Brennkammer. Die Temperatur in der Brennkammer wird optisch erfasst, indem Wärmestrahlung aus der Brennkammer durch eine Bohrung auf ein außerhalb der Brennkammer angeordnetes Temperaturerfassungselement trifft. Demgegenüber ist es Aufgabe der Erfindung, den Dentalpressofen gemäß dem Oberbegriff von Anspruch 1 zu verbessern und Fehlpressungen nach Möglichkeit zu vermeiden.

Die Aufgabe wird erfindungsgemäß durch die Merkmale von Anspruch 1 gelöst. Bevorzugte Weiterbildungen sind Gegenstand der abhängigen Ansprüche.

Der erfindungsgemäße Dentalpressofen hat den besonderen Vorteil, dass die Temperatur beim Pressen des Rohlings in unmittelbare Nähe des Rohlings direkt erfasst werden kann. Es ist mit dem eingangs genannten, in der Muffel aufgenommenen Thermoelement zwar möglich, die Temperatur in der Brennkammer zu erfassen. Nachteilig ist jedoch, dass dieses Thermoelement in der Brennkammer des Dentalpressofens hohen Temperaturbelastungen und mechanischen Belastungen ausgesetzt ist, weshalb hier sehr kostenintensive Mantelthermoelemente eingesetzt werden müssen, um einigermaßen dauerhaft einsetzbar zu sein. Ungeachtet dessen ist auch die Handhabung dieses in der Muffel aufnehmbaren Thermoelements sehr problematisch. Der Zahntechniker muss die Muffel stets über diesem Thermoelement positionieren, da das Thermoelement wie in einer Feder-Nut-Verbindung eine Formschlussverbindung zwischen der Brennkammer und der Muffel des Dentalpressofens herstellt, die vom Thermoelement durchdrungen werden muss.

Demgegenüber deutlich verbessert ist der erfindungsgemäße Dentalpressofen, im Rahmen dessen die Temperatur des Rohlings nicht unmittelbar vor Ort sensorisch erfasst, ausgewertet und dann aus der Brennkammer herausgeleitet wird. Daher wird vorgeschlagen, die interessierende Temperatur nicht direkt vor Ort am Rohling für das herzustellende Dentalrestaurationsteil sensorisch zu erfassen, sondern außerhalb der Brennkammer. Dazu ist der optische Leiter vorgesehen, der die Temperatur des Rohlings oder eines direkt mit dem Rohling in Verbindung stehenden Elements, wie beispielsweise dem Pressstempel aus der Brennkammer heraus überträgt und die Temperaturmessung außerhalb der Brennkammer zulässt.

Anders als ein Thermoelement muss der optische Leiter jedoch nicht einstückig ausgebildet sein, denn die zu übertragende Temperatur kann bei einem mehrstückig aufgebauten optischen Leiter die einzelnen Schnittstellen zwischen optischen Leiterabschnitten durchtreten. Daher muss der optische Leiter entgegen dem oben genannten Thermoelement einzelne Elemente des Dentalpressofens, die von ihm durchdrungen werden, nicht zwangsläufig formschlüssig verbinden. In der Folge steht der Sensorapparat zur Erfassung der Temperatur den einzelnen, in der Brennkammer aufgenommenen Elementen, wie Muffel und Pressstempel, in ihrer Anordnung nicht mehr im Wege, wodurch die Handhabung des angegebenen Dentalpressofens spürbar vereinfacht ist, denn der Zahntechniker wird bei Positionierung der Elemente des Dentalpressofens nicht mehr durch den Temperatursensor eingeschränkt. Durch den optischen Leiter zum Leiten der Temperatur in Form von Temperaturstrahlung, ist die Temperatur des Rohlings basierend auf der herausgeleiteten Temperaturstrahlung erfassbar. Überraschend lassen sich Fehlpressungen erfindungsgemäß vermeiden, wohl da die Ausgangstemperatur des Rohlings, aber auch der Temperaturverlauf auch langzeitstabil exakt gemessen werden kann und das Ausgangssignal des erfindungsgemäßen Temperatursensors als Stellgröße für die Ofensteuerung verwendet werden kann.

In einer Weiterbildung des erfindungsgemäßen Dentalpressofens ist der optischer Leiter parallel zu einer Lichtleitrichtung des optischen Leiters beschichtet. Im Rahmen dieser Beschichtung wird wirksam vermieden, dass die vom optischen Leiter übertragene Temperaturstrahlung durch seitlich eindringende Temperaturstrahlung aus der Brennkammer bzw. dem Heizelement verfälscht wird, was die Temperaturmessung weiter verbessert.

In einer bevorzugten Weiterbildung des erfindungsgemäßen Dentalpressofens ist der optische Leiter aus Quarzglas oder Saphir gefertigt. Derartige Materialien weisen nicht nur eine günstige Lichtleitfähigkeit sondern sind auch mechanisch stabil, so dass der Pressstempel zumindest bereichsweise vollständig aus dem optischen Leiter allein ausgebildet werden könnte. Alternativ kann auch eine Bohrung, ein Hohlraum oder eine, Durchtrittsausnehmung als optischer Leiter verwendet werden.

In einer zusätzlichen Weiterbildung des erfindungsgemäßen Dentalpressofens umfasst der Pressstempel einen Grundkörper mit einer Kraftaufnahmefläche zum Aufnehmen der Presskraft und einer in Richtung der Presskraft gesehenen, der Kraftaufnahmefläche gegenüberliegenden Pressfläche zum Beaufschlagen des Rohlings mit der Presskraft, wobei sich der optische Leiter von der Kraftaufnahmefläche hin zur Pressfläche erstreckt. Der optische Leiter kann dabei vollständig vom Pressstempel ummantelt bleiben. Je näher der optische Leiter im Pressstempel jedoch an die Pressfläche und damit die Kontaktfläche zum zu verpressenden Rohling herangeführt wird, desto genauer sind die Messergebnisse für die Temperatur des Rohlings, die mit dem optischen Temperatursensor über den optischen Leiter erfasst werden.

In einer besonderen Weiterbildung des erfindungsgemäßen Dentalpressofens durchdringt der optische Leiter den Grundkörper von der Kraftaufnahmefläche zur Pressfläche hin. Zwar sind die Ergebnisse der Temperaturmessung im Rahmen des angegebenen Dentalpressofens bereits zufriedenstellend, wenn der Rohling vom optischen Leiter durch Verschmutzungen oder einer Wand des Pressstempels getrennt ist, beste Messergebnisse werden jedoch mit dem optischen Leiter dann erreicht, wenn der optische Leiter direkt bis an der Rohling herangeführt wird, so dass der optische Leiter den Pressstempel vollständig durchdringt.

In einer anderen Weiterbildung des erfindungsgemäßen Dentalpressofens der Erfindung ist der Grundkörper des Presstempels aus einem Pressstab mit der Kraftaufnahmefläche und einem Kontaktkolben mit der Pressfläche zusammengesetzt. Auf diese Weise können Materialien des Pressstempels optimal auf die Anforderungen an den einzelnen Flächen abgestimmt werden. So könnte der Kontaktkolben beispielsweise ein Aluminiumoxidkolben sein, der Verunreinigungen am Pressstab verhindert. Zudem ist Aluminiumoxid spröde und weist einen Ausdehnungskoeffizienten auf, der im Bereich der Ausdehnungskoeffizienten gängiger Materialen liegt, die als Rohling zur Herstellung des Dentalrestaurationsteils verwendet werden.

Selbst wenn Verunreinigungen an der Grenzfläche zwischen dem optischen Leiter oder Kontaktkolben und dem Rohling entstehen, sind diese typischerweise auf der gleichen Temperatur wie der Rohling. Wenn der Temperaturüberträger also dort anliegt, wird dennoch die Temperatur des Rohlings übertragen.

In einer alternativen Weiterbildung des erfindungsgemäßen Dentalpressofens sind der Pressstab und der Kontaktkolben über einen in Richtung der Presskraft wirkenden Formschluss miteinander verbunden. Wird der optische Leiter zweiteilig ausgebildet, wobei ein Teil durch den Pressstab und der andere Teil durch den Kontaktkolben geführt wird, verbessert der in Presskraftrichtung wirkende Formschluss insbesondere bei angelegter Presskraft den optischen Übergang zwischen den beiden Teilen des optischen Leiters und unterstützt so die Temperaturmessung.

In einer bevorzugten Weiterbildung des erfindungsgemäßen Dentalpressofens wirkt der Formschluss zusätzlich quer zur Richtung der Presskraft, so dass der Kontaktkolben und der Pressstab in einer vorbestimmten Lage zueinander aufgenommen werden, in der insbesondere im Rahmen des zuvor genannten zweiteiligen Aufbaus des optischen Leiters die beiden Teile sicher miteinander in Kontakt gebracht werden können, um einen optischen Durchgang zur Übertragung der Temperaturstrahlung herzustellen.

In einer alternativen Weiterbildung des erfindungsgemäßen Dentalpressofens umfasst der Dentalpressofen einen in die Brennkammer eingreifenden weiteren Temperatursensor zum Erfassen einer Raumtemperatur in der Brennkammer. Diese Raumtemperatur kann dann beispielsweise zur Temperatursteuerung im Ofen herangezogen werden, wobei auch eine Fehlerüberwachung möglich ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
Fig. 1 einen Dentalpressofen mit einem Pressstempel gemäß einem ersten Ausführungsbeispiel;
Fig. 2 ein Temperaturdiagramm mit Temperaturverläufen an verschiedenen Stellen im Dentalpressofen; und
Fig. 3 eine schematische Ansicht einer weiteren Ausführungsform der Erfindung, in einer Detaildarstellung.

In den Figuren werden gleiche technische Elemente mit gleichen Bezugszeichen versehen und nur einmal beschrieben.

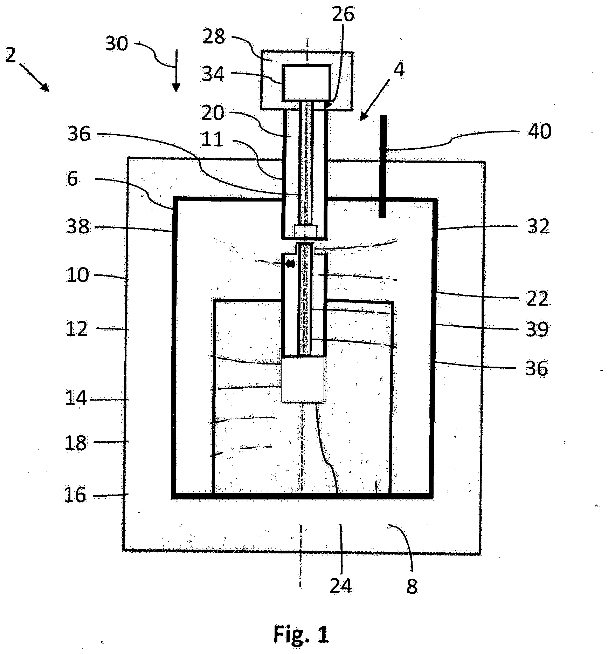

Es wird auf Fig. 1 Bezug genommen, die einen Dentalpressofen 2 mit einem Pressstempel 4 gemäß einem ersten Ausführungsbeispiel zeigt.

Der Dentalpressofen 2 weist in an sich bekannter Weise eine Brennkammer 6 zur Aufnahme einer Muffel 8 sowie ein in der Brennkammer 6 angeordnetes Heizelement 10 zum Aufheizen der Brennkammer 6 und damit der Muffel 8 auf. Die Brennkammer 6 weist eine den Pressstempel 4 führende Führungsöffnung 11 auf.

Die Muffel 8 weist einen Aufnahmeraum 12 auf, in dem ein Rohling 14 zur Herstellung eines Dentalrestaurationsteils aufgenommen ist. Die Muffel 8 ist als Einbettmassenmuffel ausgebildet, in deren Aufnahmeraum 12 der Rohling 14 beispielsweise in Form eines Rohlings, insbesondere eines Keramikrohlings aufgenommen ist.

In der Muffel 8 ist mindestens ein Hohlraum 16 mit der Form des herzustellenden Dentalrestaurationsteils ausgebildet. Der Hohlraum 16 ist mit dem Aufnahmeraum 12 über einen Verbindungskanal 18 verbunden. Auf der dem Verbindungskanal 18 gegenüberliegenden Seite ist der Aufnahmeraum 12 mit dem Pressstempel 4 verschlossen.

Der Pressstempel 4 ist in der vorliegenden Ausführung zweiteilig aus einem Pressstab 20 und einem Kontaktkolben aus Aluminiumoxid, nachstehend AlOx-Kolben 22 genannt, aufgebaut. Während der AlOx-Kolben 22 an einer Pressfläche 24 direkt mit dem zum Dentalrestaurationsteil umzuformenden Rohling 14 in Kontakt steht, weist der Pressstab 20 eine Kraftaufnahmefläche 26 auf, an der ein Antrieb 28, beispielsweise in Form eines Schrittmotors angreift, um den Pressstab 20 in einer Pressrichtung 30 in Richtung des Rohlings 14 zu bewegen. Der Alox-Kolben 22 und der Pressstab 20 sind über einen Formschluss 32 miteinander verbindbar, der in Pressrichtung 30 wirkt, um eine Presskraft des Antriebs 28 auf den Rohling 14 zu übertragen. Ferner wirkt der Formschluss 32 quer zur Pressrichtung 30, um den Pressstab 20 und den AlOx-Kolben 22 zueinander exakt auszurichten.

Im Betrieb des Dentalpressofens 2 wird zur Herstellung des Dentalrestaurationsteils die in der Brennkammer 6 aufgenommene Muffel 8 und damit den in dem Aufnahmeraum 12 gehaltenen Rohling 14 mit dem Heizelement 10 solange aufgeheizt, bis der Rohling 14 einen viskosen Zustand erreicht hat, in dem es mit dem Pressstempel 4 über den Verbindungskanal 18 in den Hohlraum 16 gepresst werden kann. Dann wird der Pressstempel 4 über den an der Kraftaufnahmefläche 26 angreifenden Antrieb 28 in der Pressrichtung 30 bewegt. Der Pressstempel 4 und damit der aufgeheizte, viskose Rohling 14 an der Pressfläche 24 entweicht mit der Antriebskraft des Antriebs 28 beaufschlagt über den Verbindungskanal 18 in den Hohlraum 16. Wenn der Hohlraum 16 vollständig mit dem Material des Rohlings 14 ausgefüllt ist, wird das in dem Hohlraum 16 entstandene Dentalrestaurationsteil 14 abgekühlt.

Zum Start des Pressvorgangs des Dentalrestaurationsteils muss jedoch gesichert sein, dass der Rohling 14 ausreichend aufgewärmt ist und somit genügend viskos ist, um verpresst werden zu werden.

Hierzu umfasst der Dentalpressofen 2 erfindungsgemäß einen im Bereich des Antriebs 28 angeordneten optischen Temperatursensor 34 und einen optischen Leiter in Form eines Lichtleiters 36, der in der vorliegenden Ausführung der Rohling 14 im Aufnahmeraum 12 ist und den optischen Temperatursensor 34 miteinander optisch verbindet. Der erwärmte Rohling 14 strahlt nicht weiter dargestellte Temperaturstrahlung ab, die vom Lichtleiter 36 aufgefangen und zum außerhalb der Brennkammer angeordneten optischen Temperatursensor 34 weitergeleitet wird. Auf diese Weise kann der optische Temperatursensor 34 außerhalb der Brennkammer den optimalen Zeitpunkt zum Start des Antriebs 28 und damit der Herstellung des Dentalrestaurationsteils basierend auf der Temperatur des Rohlings 14 bestimmen. Die Temperatur des Rohlings 14 wird auch während des Pressvorgangs fortlaufend überwacht.

Hierdurch ergibt sich der Vorteil, dass der Brenn- bzw. Pressprozess sich erheblich beschleunigen lässt. Die Brennkammer kann zunächst auf eine Temperatur aufgeheizt werden, die oberhalb der Presstemperatur ist. Hierdurch entsteht eine raschere Wärmeübertragung durch die Muffel hindurch auf den Rohling, und durch die Erfassung der Temperatur am Rohling ist sicher gestellt, dass diese nicht oberhalb der Presstemperatur ist. Kurz vor Erreichen der Presstemperatur wird die Temperatur in der Brennkammer abgesenkt, und zwar auf einen Wert, der der Presstemperatur entspricht, oder gegebenenfalls auch auf eine Temperatur unterhalb dieser. Durch die Wärmekapazität der Muffel wird deren Restwärme noch auf den Rohling übertragen, und durch die exakte Erfassung der Temperatur am Rohling ist es möglich, zu verhindern, dass dieser oberhalb der Presstemperatur erwärmt ist. Der Presszeitpunkt wird hierdurch exakt bestimmt und die Pressung beim Erreichen der Presstemperatur umgehend ausgelöst.

In der vorliegenden Ausführung ist der Lichtleiter 36 an der Stelle des Übergangs unterbrochen, kann jedoch gemeinsam mit dem Pressstab 20 und dem AlOx-Kolben 22 in Pressrichtung 30 formschlüssig zusammengesetzt werden. Der Schnittstelle zwischen den beiden Teilen des Lichtleiters 36 im Bereich des Übergangs 32 hat auf die Temperaturstrahlung vom Rohling 14 zum optischen Temperatursensor 34 hin nur einen für die Temperaturmessung vernachlässigbaren Einfluss.

Das heißt, dass Ungenauigkeiten in der Positionierung des Pressstabs 20 zum AlOx-Kolben 22 im Rahmen der Temperaturmessung vernachlässig werden können. Etwa sich ansammelnde Verschmutzungen zwischen dem Rohling 14 und dem AlOx-Kolben 22 und auf der Temperatur des Rohlings 14, so dass sie die Temperaturmessung am Rohling nicht beeinträchtigen.

Um den AlOx-Kolben 22 immer in einer vordefinierten Richtung zwischen dem Pressstab 20 und dem Rohling 14 zu verwenden, kann am AlOx-Kolben 22 alternativ zu dem vorhandenen Formschluss 32 oder Übergang zusätzlich dazu eine Markierung 38 angeordnet sein, die beispielsweise zeigt, welche Seite des AlOx-Kolbens 22 zum Pressstab 20 ausgerichtet werden muss.

Schließlich kann der Lichtleiter quer zur Pressrichtung 30 eine reflektierende Beschichtung 39 aufweisen, die vermeidet, dass Temperaturstrahlung aus der Brennkammer 6 in den Lichtleiter eindringt, die nicht zur Temperaturstrahlung vom Rohling 14 gehört.

Zur Regelung der Temperatur in der Brennkammer 6 kann ein an sich bekanntes Regelthermoelement 40 vorhanden sein. In besonders günstiger Weise liefert der optische Temperatursensor 34 über die vom Regelthermoelement 40 erfasste Temperatur in der Brennkammer 6 hinaus eine zweite Temperaturinformation, anhand der sich die vom Regelthermoelement 40 erfasste Temperatur beispielsweise plausibilisieren lässt und anhand dessen auch eine verbesserte Temperaturregelung erzielen lässt und in weiterer Folge der Prozess als ganzes beschleunigt wird.

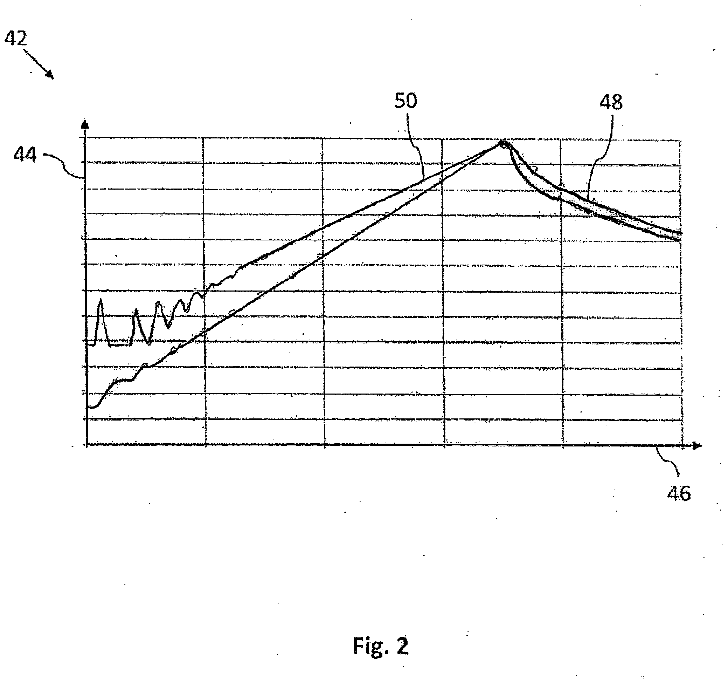

In Fig. 2 ist beispielhaft in einem Diagramm 42 mit über die Zeit 46 aufgetragenen Temperaturen 44, die Brennkammertemperatur 48 aus dem Regelthermoelement 40 und die Materialtemperatur 50 aus dem optischen Temperatursensor 34 gegenübergestellt.

Wie ersichtlich ist, ergibt sich eine Zeitverzögerung zwischen der Brennkammertemperatur 48 und der über dem Sensor 34 gemessenen Temperatur 50 des Rohlings.

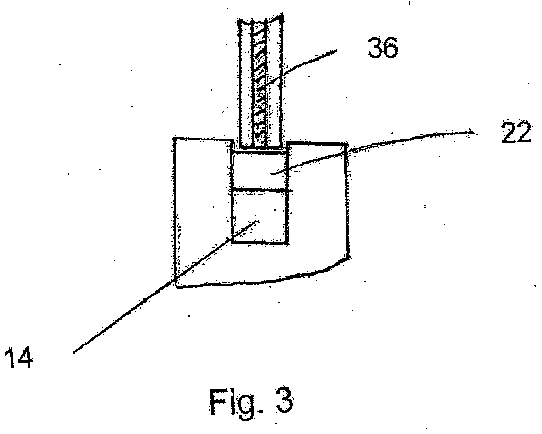

In Fig. 3 ist eine modifizierte Ausführungsform eines Dentalpressofens 2 ausschnittsweise dargestellt. Der Lichtleiter 36 erstreckt sich auch hier durch den Pressstab 20. Zwischen dem Pressstab 20 und dem Rohling 14 ist ein Kontaktkolben aus Quarzglas oder einem anderen gut wärmeleitenden Material realisiert, welches Material die Temperatur des Rohlings 14 annimmt und insofern eine exakte Temperaturbestimmung des Rohlings ermöglicht.

Die Wärmeleitfähigkeit des Kontaktkolbens 22 ist jedenfalls deutlich höher, beispielsweise drei mal höher als die Wärmeleitfähigkeit der Muffel, die den Rohling 14 und den Kontaktkolben 22 umgibt.

## Patentansprüche

1. Dentalpressofen zum Herstellen eines Dentalrestaurationsteils in einer Muffel (8) durch Erwärmen und Verpressen eines Rohlings (14), mit einer Brennkammer (6) einem In einer Führungsöffnung (11) geführten Pressstempel (4) zum Beaufschlagen des erwärmten Rohlings (14) in der Muffel (8) mit einer Presskraft, **dadurch gekennzeichne**t, dass ein wenigstens teilweise durch den Pressstempel (4) geführter optischer Leiter (36) zum Leiten der Temperatur (50) des Rohlings (14) in Form von Temperaturstrahlung eingerichtet ist, die Temperatur (50) des Rohlings (14) in der Brennkammer (6) aus dieser heraus zu leiten, und dass ein an den optischen Leiter (36) außerhalb der Brennkammer angeschlossener optischer Temperatursensor (34) die Temperatur (50) des Rohlings (14) basierend auf der heraus geleiteten Temperaturstrahlung erfasst.

2. Dentalpressofen nach Anspruch 1, **dadurch gekennzeichnet, dass** der optische Leiter (36) aus Quarzglas oder Saphir gefertigt ist.

3. Dentalpressofen nach Anspruch 2, **dadurch gekennzeichnet, dass** der optische Leiter (36) parallel zur Lichtleitrichtung des optischen Leiters (36) beschichtet (39) Ist.

4. Dentalpressofen nach Anspruch 1, **dadurch gekennzeichnet, dass** der optische Leiter (36) aus einer Durchtrittsausnehmung besteht.

5. Dentalpressofen nach einem der vorstehenden Ansprüche, **dadurch gekennzeichnet, dass** der Pressstempel (4) einen Grundkörper mit einer Kraftaufnahmelläche (26) zum Aufnehmen der Presskraft und einer in Richtung (30) der Presskraft gesehenen, der Kraftaufnahmefläche (26) gegenüberliegenden Pressfläche (24) zum Beaufschlagen des Rohlings (14) mit der Presskraft aufweist, und wobei sich der optische Leiter (36) von der Kraftaufnahmefläche (26) hin zur Pressfläche (24) erstreckt.

6. Dentalpressofen nach Anspruch 5, **dadurch gekennzeichnet, dass** der optische Leiter (36) den Grundkörper von der Kraftaufnahmefläche (26) zur Pressfläche (24) hin durchdringt.

7. Dentalpressofen nach Anspruch 5 oder 6, **dadurch gekennzeichnet, dass** der Grundkörper aus einem Pressstab (20) mit der Kraftaufnahmefläche (26) und einem Kontaktkolben (22) mit der Pressfläche (24) zusammengeseizt ist.

8. Dentalpressofen nach Anspruch 7, **dadurch gekennzeichnet, dass** der Pressstab (20) und der Kontaktkolben (22) über einen in Richtung (30) der Presskraft wirkenden Formschluss (32) miteinander verbunden sind.

9. Dentalpressofen nach Anspruch 7 oder 8, **dadurch gekennzeichnet, dass** der Kontaktkolben (22) eine Markierung aufweist, über welche die Position des Kontaktkolbens zum Rohling (14) identifizierbar ist.

10. Dentalpressofen nach einem der vorhergehenden Ansprüche, **dadurch gekennzeichnet, dass** die von dem optischen Temperatursensor (34) erfasste Temperatur des Rohlings (14) den Pressvorgang auslöst.

11. Dentalpressofen nach einem der vorstehenden Ansprüche, **gekennzeichnet durch** einen Antrieb (28), der die Presskraft zum Beaufschlagen des erwärmten Rohlings (14) In der Muffel (8) erzeugt, der außerhalb der Brennkammer und dem optischen Temperatursensor (34) benachbart angeordnet ist.

12. Dentalpressofen nach einem der vorstehenden Ansprüche, **dadurch gekennzeichnet, dass** der optische Leiter (36) sich über den Pressstempel (4) hinaus erstreckt und der Pressantrieb (28) den optischen Temperatursensor (34) umgibt.

13. Dentalpressofen nach einem der vorstehenden Ansprüche, **dadurch gekennzeichnet, dass** der optische Leiter (36) an der dem optischen Temperatursensor (34) gegenüberliegenden Seite an dem Rohling (1.4) anliegt oder an einer Stelle endet, die weniger als etwa 1 mm von dem Rohling (14) beabstandet ist.

14. Dentalprassofen nach einem der vorstehenden Ansprüche, **gekennzeichnet durch** einen weiteren; in die Brennkammer (6) hineinragenden Temperatursensor (40) zum Erfassen einer Raumtemperatur (48) in der Brennkammer (6).

## Claims

1. A dental pressing furnace for producing a dental restoration part in a muffle (8) by heating and pressing a blank (14), with a combustion chamber (6), a pressing stamp (4) guided in a guide opening (11) for applying pressing force to the heated blank (14) in the muffle (8), **characterized in that** an optical conductor (36) guided at least partially through the pressing stamp (4) for conducting the temperature (50) of the blank (14) in the form of thermal radiation is configured to conduct the temperature (50) of the blank (14) from the combustion chamber (6), and that an optical temperature sensor (34) connected to the optical conductor (36) outside of the combustion chamber detects the temperature (50) of the blank (14) based on the thermal radiation which has been conducted to the outside.

2. The dental pressing furnace in accordance with Claim 1, **characterized in that** the optical conductor (36) is made out of quartz glass or sapphire.

3. The dental pressing furnace in accordance with Claim 2, **characterized in that** the optical conductor (36) is coated (39) in parallel with the light guiding direction of the optical conductor (36).

4. The dental pressing furnace in accordance with Claim 1, **characterized in that** the optical conductor (36) consists of a through-hole.

5. The dental pressing furnace in accordance with one of the preceding Claims, **characterized in that** the pressing stamp (4) is provided with a base body with a force absorption surface (26) for absorbing the pressing force and with a pressing surface (24) for applying the pressing force to the blank (14), which pressing surface is positioned opposite of the force absorption surface (26) observed in the direction (30) of the pressing force, and wherein the optical conductor (36) extends from the force absorption surface (26) towards the pressing surface (24).

6. The dental pressing furnace in accordance with Claim 5, **characterized in that** the optical conductor (36) penetrates the base body from the force absorption surface (26) towards the pressing surface (24).

7. The dental pressing furnace in accordance with Claim 5 or 6, **characterized in that** the base body is made up of a pressing rod (20) with the force absorption surface (26) and a contact piston (22) with the pressing surface (24).

8. The dental pressing furnace in accordance with Claim 7, **characterized in that** the pressing rod (20) and the contact piston (22) are connected with each other with the help of a positive connection (32) acting in the direction (30) of the pressing force,

9. The dental pressing furnace in accordance with Claim 7 or 8, **characterized in that** the contact piston (22) is provided with a marking with the help of which the position of the contact piston in relation to the blank (14) can be identified.

10. The dental pressing furnace in accordance with one of the preceding Claims, **characterized in that** the temperature of the blank (14) detected by the optical temperature sensor (34) activates the pressing process.

11. The dental pressing furnace in accordance with one of the preceding Claims, **characterized by** a drive unit (28) which creates the pressing force to be applied to the heated blank (14) in the muffle (8), which is arranged outside of the combustion chamber and adjacent to the temperature sensor (34).

12. The dental pressing furnace in accordance with one of the preceding Claims, **characterized in that** the optical conductor (36) extends beyond the pressing stamp (14) and that the pressing drive unit (28) surrounds the optical temperature sensor (34).

13. The dental pressing furnace in accordance with one of the preceding Claims, **characterized in that** the optical conductor (36) abuts against the side of the blank (14) positioned opposite of the optical temperature sensor (34) or terminates at a position which is spaced apart from the blank (14) by less than approximately 1 mm.

14. The dental pressing furnace in accordance with one of the preceding Claims, **characterized by** another temperature sensor (40) protruding into the combustion chamber (6) for detecting a room temperature (48) in the combustion chamber (6).

## Revendications

1. Four dentaire pour la fabrication d'une pièce de restauration dentaire dans un moufle (8) par le chauffage et le pressage d'un lingotin (14), avec une chambre de cuisson (6), une matrice de pressage (4) introduite dans une ouverture de guidage (11) pour exposer le lingotin (14) chauffé dans le moufle (8) à une force de pressage, **caractérisé en ce qu'**un conducteur optique (36) dirigé au moins partiellement à travers la matrice de pressage (4) est aménagé afin de conduire la température (50) du lingotin (14) sous forme de rayonnement thermique, diriger la température (50) du lingotin (14) dans la chambre de combustion (6) hors de celle-ci et qu'une sonde de température (34) reliée au conducteur optique (36) à l'extérieur de la chambre de combustion, détecte la température (50) du lingotin (14) basée sur le rayonnement thermique dirigé vers l'extérieur.

2. Four dentaire four selon la revendication 1, **caractérisé en ce que** le conducteur optique (36), est fabriquée en quartz ou saphir.

3. Four dentaire selon la revendication 2, **caractérisé en ce que** le conducteur optique (36) est recouvert (39) parallèle au sens de conduction de la lumière du conducteur optique (36.

4. Four dentaire selon la revendication 1, **caractérisé en ce que** le conducteur optique (36) se compose d'une cavité de passage.

5. Four dentaire selon l'une des revendications précédentes, **caractérisé en ce que** la matrice de pressage (4) présente un corps de base avec une surface d'absorption de force (26) pour absorber la force et une surface de pressage (24) en face de la surface d'absorption de force (26) vu dans le sens (30) de la force de pressage pour exposer le lingotin (14)) à la force de pressage (14) et où le conducteur optique (36) s'étend de la surface d'absorption de force à la surface de pressage (24).

6. Four dentaire selon la revendication 5, **caractérisé en ce que** le conducteur optique (36) pénètre le corps de base de la surface d'absorption de force (26) à la surface de pressage (24).

7. Four dentaire selon la revendication 5 ou 6, **caractérisé en ce que** le corps de base est composé d'une tige de pressage (20) avec la surface d'absorption de force (26) et un piston de contact (22) avec la surface de pressage (24).

8. Four dentaire selon la revendication 7, **caractérisé en ce que** la tige de pressage (20) et le piston de contact (22) sont reliés entre eux par un engagement positif (32) agissant dans le sens (30) de la force de pressage.

9. Four dentaire selon la revendication 7 ou 8, **caractérisé en ce que** le piston de contact (22) dispose d'un marquage par lequel la position du piston de contact par rapport au lingotin (14) est identifiable.

10. Four dentaire selon l'une des revendications précédentes, **caractérisé en ce que** la température du lingotin (14) mesurée par la sonde optique (34) déclenche le procédé de pressage.

11. Four dentaire selon l'une des revendications précédentes, **caractérisé par** un entraînement (28) qui génère la force de pressage à appliquer au lingotin chauffée (14) dans le moufle (8), qui est disposé à l'extérieur de la chambre de combustion et avoisinant la sonde optique (34).

12. Four dentaire selon l'une des revendications précédentes, **caractérisé en ce que** le conducteur optique (36) s'étend au-delà de la matrice de pressage (4) et l'entraînement de pressage (28) entoure la sonde optique (34).

13. Four dentaire selon l'une des revendications précédentes, **caractérisé en ce que** le conducteur optique (36) est placé contre le lingotin (14) sur le côté (34) opposé de la sonde de température optique, ou se termine à une position qui se trouve espacée à moins de 1 mm du lingotin (14).

14. Four dentaire selon l'une des revendications précédentes, **caractérisé par** une autre sonde de température pénétrant dans la chambre de combustion (6) (40) pour détecter une température ambiante (48) dans la chambre de combustion (6).
